# EUROPÄISCHE PATENTSCHRIFT

(11) **EP 0 463 997 B1**
(45) Veröffentlichungstag und Bekanntmachung des Hinweises auf die Patenterteilung: **18.01.1995**
(21) Anmeldenummer: 91810482.9
(22) Anmeldetag: 20.06.1991
(51) Int. Cl.: G03B 27/58

(54) **Kassette zum Aufwickeln von fotografischem Bandmaterial**
Cassette for winding a web of photographic material
Cassette pour l'enroulement de matériau photographique en bande

(30) Priorität: 29.06.1990 CH 2174/90
(43) Veröffentlichungstag der Anmeldung: 02.01.1992
(73) Patentinhaber: GRETAG IMAGING AG, CH-8105 Regensdorf (CH)
(72) Erfinder: Gassmann, Werner, CH-8114 Dänikon (CH); Dünner, Albert, CH-8046 Zürich (CH); Binder, Erich-Gustav, CH-8107 Buchs (CH)
(74) Vertreter: Kleewein, Walter, Dr.

(56) Entgegenhaltungen:
- CH-A- 359 972
- CH-A- 466 713
- DE-A- 2 846 953
- DE-A- 3 048 727
- DE-A- 3 150 495

## Beschreibung

Die Erfindung betrifft eine Kassette zum Aufwickeln von fotografischem Bandmaterial gemäss Oberbegriff von Patentanspruch 1.

Derartige Kassetten sind in zahlreichen Ausführungen bekannt. Sie werden vor allem in Fotolabors in Verbindung mit mehr oder weniger stark automatisierten Kopiergeräten eingesetzt, an die sie lichtdicht angekoppelt werden können, so dass die Kassette mit aufzuwickelndem Bandmaterial, z.B. belichtetem Fotopapier, direkt versorgt werden kann. Aus den Druckschriften DE-OS-28 46 953, DE-OS-30 48 727, DE-OS-31 16 041 und DE-OS-29 39 430 sind verschiedene solcher Kassettentypen bekannt, bei denen das aufzuwickelnde Fotopapier mit Hilfe verschiedener Mittel auf einen Wickelkern aufgewickelt wird. Bei den dort beschriebenen Kassetten wird aber nicht näher auf die Montage und Demontage des Wickelkerns bzw. auf das Aufschieben und Befestigen einer Hülse, auf die das Fotopapier aufgewickelt wird, eingegangen.

Eine weitere derartige Kassette ist aus der DE-PS-31 50 495 bekannt. Bei der dort beschriebenen Kassette wird das aufzuwickelnde Bandmaterial auf ein auswechselbares Spulenteil aufgewickelt, welches auf einem Aufnahmedorn sitzt, der drehbar gelagert ist. Auf den zylindrischen Körper des Spulenteils ist ein Pappkern aufschiebbar, der den gewünschten Aussendurchmesser aufweist. Zu beiden Seiten des Pappkerns sind FLansche vorgesehen, die durch Aussenringe an dem Pappkern gehaltert werden. Diese Aussenringe sind mit dem zylindrischen Körper des Spulenteils fest verbindbar, so dass die Führung des Pappkerns durch die Flansche gewährleistet ist. Eine solche Kassette hat den Nachteil, dass beim Umwickeln des Pappkerns die Reibung zwischen der Oberfläche des Pappkerns und dem Bandmaterial oft nicht ausreicht, um beim Aufwickeln des Bandmaterials Luftzwischenräume zwischen den einzelnen um den Pappkern gewickelten Lagen des Bandmaterials zu vermeiden. Mittel, die das Bandmaterial ständig gegen den Wickel drücken, sind jedoch in dieser Druckschrift nicht erwähnt. Ein erheblicher Nachteil ist auch, dass beim Auswechseln eines solchen Spulenteils, beispielsweise wenn ein Wickel vollständig mit Bandmaterial bewickelt ist, stets das gesamte Spulenteil mit dem aufgeschobenen Pappkern ausgewechselt werden und ein neues Spulenteil mit aufgesetztem Pappkern eingesetzt werden muss. Ausserdem muss bei der weiteren Bearbeitung eines vollständig bewickelten Pappkerns dieser dann auch erst von dem zylindrischen Körper des Spulenteils heruntergenommen werden, wenn nicht in der nachfolgenden Bearbeitungsstation eine Aufnahme vorgesehen ist, die genau auf die Abmessungen des Aufnahmedorns zugeschnitten ist, auf dem das Spulenteil mit dem Pappkern aufsitzt. Dies bedeutet einen zusätzlichen Arbeitsgang und damit zusätzlichen Aufwand.

Eine weitere derartige Kassette ist aus der DE-PS-30 34 081 bekannt. Bei der dort beschriebenen Kassette wird das aufzuwickelnde Bandmaterial in einem Bandkanal geführt, der durch eine Gliederkette gebildet wird, die sich um einen Pappkern herum erstreckt. Am Ende dieser Gliederkette ist ein um eine Achse drehbarer Trägerhebel angebracht, an dessen anderem Hebelarmende eine Rolle angebracht ist, die das aufzuwickelnde Bandmaterial gegen den Pappkern bzw. das bereits auf diesen Pappkern schon aufgewickelte Bandmaterial drückt. Der Pappkern selbst ist auf einen drehbar gelagerten Sechskantkern aufgeschoben. Nachteilig bei dieser Kassette ist zum einen, das beim Auswechseln eines bewickelten Pappkerns zunächst die Gliederkette, die um den Wickel herum anliegt, wegbewegt bzw. ausgehängt werden muss, um den Pappkern vom drehbaren Sechskantkern abnehmen zu können. Ausserdem ist das Aufschieben und Abnehmen des Pappkerns nicht ganz einfach, da der Pappkern fest auf dem Sechskantkern aufsitzen muss, um von der Drehbewegung des Sechskantkerns einwandfrei mitgenommen zu werden. Sitzt der Pappkern dagegen nur locker auf dem Sechskantkern auf, so kann es passieren, dass er von der Drehbewegung des Sechskantkerns nicht einwandfrei mitgenommen wird und somit Bandmaterialstauungen in der Kassette entstehen können, da der Aufwickelvorgang während der Zeit, in der der Sechskantkern den Pappkern nicht mitnimmt, unterbrochen ist, das Bandmaterial aber kontinuierlich in die Kassette nachgeführt wird. Ein festes Aufsitzen des Pappkerns ist also einerseits unerlässlich, andererseits soll der Kern aber auch auf einfache Weise austauschbar sein.

Es ist daher die Aufgabe der Erfindung, eine einfache Montage und Demontage des Kerns bzw. der Hülse, auf den bzw. die das Bandmaterial aufwickelbar ist, zu ermöglichen und gleichzeitig ein festes Aufsitzen dieses Kerns bzw. dieser Hülse beim Aufwickelvorgang zu gewährleisten. Der mechanische Aufwand soll dabei möglichst gering sein.

Diese Aufgabe wird durch die Erfindung, wie sie im Patentanspruch 1 definiert ist, gelöst. Besonders vorteilhafte Ausgestaltungen der Erfindung ergeben sich aus den Merkmalen der abhängigen Ansprüche.

Im folgenden wird die Erfindung anhand der Zeichnung näher erläutert. Es zeigen, zum Teil in Schnittdarstellung:
- Fig. 1: einen Auschnitt aus einem Ausführungsbeispiel einer erfindungsgemässsen Kassette
- Fig. 2: die Führungshülse der Kassette aus Fig. 1
- Fig. 3: eine Ansicht auf ein Ende der Führungshülse aus Fig. 2
- Fig. 4: eine Ansicht einer geöffneten Kassette
- Fig. 5: einen Ausschnitt des unteren Leitorgans der Kassette in einer Ansicht in Richtung des Pfeiles V in Fig. 4

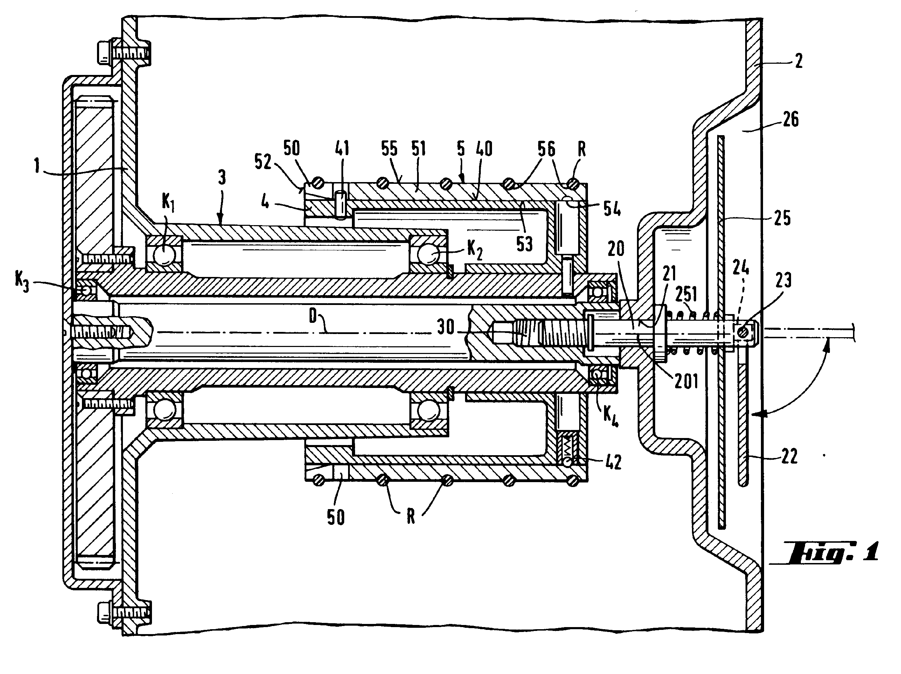

Fig. 1 zeigt einen Ausschnitt aus einem Ausführungsbeispiel einer erfindungsgemässen Kassette im Querschnitt. Dieser Ausschnitt soll besonders verdeutlichen, wie die Hülse, auf die das fotografische Bandmaterial aufgewickelt wird, auf dem Wickelkern aufgesetzt ist. Es sind bezeichnet mit 1 und 2 zwei Stirnplatten des Gehäuses, mit 3 ein Lagerdorn, mit 4 ein Wickelkern, der mehrere miteinander verbundene Teile umfasst und mittels Kugellager K₁, K₂, K₃ und K₄ drehbar gelagert auf den Lagerdorn 3 aufgesetzt ist. Auf dem Wickelkern 4 ist eine hohlzylindrische Führungshülse 5 aufgesetzt, die auf ihrer Aussenwand eine Anzahl umlaufender Nuten 56, hier beispielsweise fünf Nuten 56 aufweist, in die jeweils ein O-förmiger Ring R eingelegt ist, dessen Oberfläche einen hohen Reibungskoëffizienten aufweist. Auf die Darstellung des lichtdichten Mantels, der die Stirnplatten 1 und 2 verbindet, sowie auf die Darstellung der schwenkbaren Leitorgane, die das fotografische Bandmaterial um die Führungshülse herumführen, wurde aus Gründen der besseren Uebersichtlichkeit in Fig. 1 verzichtet. Auf sie wird weiter unten noch genauer eingegangen.

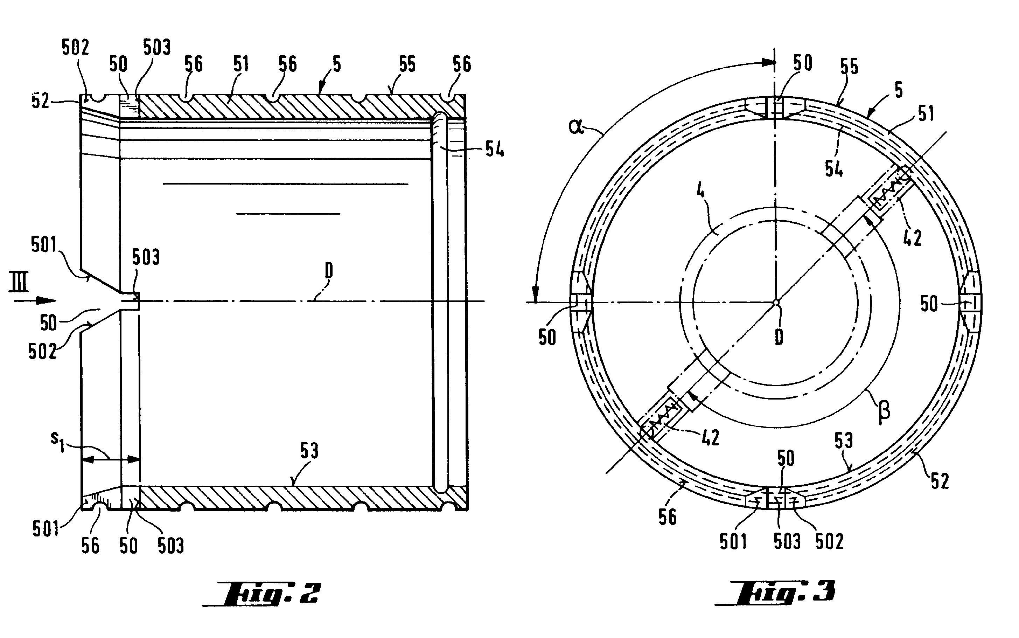

Anhand von Fig. 2 soll nun ein Ausführungsbeispiel der Führungshülse 5 der erfindungsgemässen Kassette detaillierter erläutert werden, wobei an geeigneten Stellen der Erläuterung auf die Ausschnittsdarstellung in Fig. 1 eingegangen wird, die zeigt, wie die Führungshülse 5 in ihrer Betriebsstellung auf dem Wickelkern 4 aufsitzt. In Fig. 2 ist die Führungshülse 5 in einem Längsschnitt dargestellt. Betrachtet man die Hülse 5 in der Richtung, in der sie auf den Wickelkern 4 (Fig. 1) aufgeschoben wird, in Fig. 2 also von rechts her, so weist sie in ihrem hinteren Endbereich, in Fig. 2 also links, eine Nut 50 auf, die die Wand 51 der Führungshülse 5 durchringt und sich parallel zur Drehachse D in die Hülse hinein erstreckt. Die Art und Weise, wie diese Nut 50 ausgebildet ist, erkennt man gut in der Mitte des hinteren Hülsenendes (in Fig. 2 also in der Mitte links). Die Nut 50 weist zwei konisch verlaufende FLächen 501 und 502 und eine sich an diese konischen FLächen anschliessende Nutsenke 503 auf. Die konisch verlaufenden Flächen 501 und 502 erleichtern beim Aufschieben der Hülse 5 auf den Wickelkern 4 das Hineinrutschen eines Stiftes 41 des Wickelkerns 4 (Fig. 1) in die Nutsenke 503 der Hülse. Der Stift 41 steht dabei von der Aussenwand 40 des Wickelkerns 4 in dessen hinterem Endbereich (in Fig. 1 also links) in radialer Richtung nach aussen ab. Damit die Hülse 5 vollständig auf den Wickelkern 4 aufgeschoben werden kann, muss sich die Nut 50 mindestens um die gleiche Strecke s₁ in die Hülse 5 hinein (in Fig. 2 also nach rechts hin) erstrecken, die der Stift 41 (Fig. 1) vom hinteren Ende 52 der Hülse 5 enfernt ist. Wie aus einer Seitenansicht auf das hintere Ende der Hülse 5 zu erkennen ist (Fig. 3), sind in diesem Ausführungsbeispiel vier Nuten 50, die jeweils um den Winkel α = 90° gegeneinander versetzt angeordnet sind, vorgesehen. Dadurch ist gewährleistet, dass beim Aufschieben der Hülse 5 auf den Wickelkern 4 die Hülse maximal um einen Winkel von 90° verdreht werden muss, bis eine der Nuten 50 dem Stift 41 so gegenüberliegt, dass die Hülse 5 auf den Wickelkern 4 vollständig aufgeschoben werden kann. Um die Hülse 5 beim Aufschieben um einen noch kleineren maximalen Winkel verdrehen zu müssen, können n verschiedene Nuten 50 um den Winkel α = 360°/n gegeneinander versetzt an der Hülse 5 vorgesehen sein.

Weiterhin weist die Hülse 5 in ihrem vorderen Endbereich (in Fig. 2 also rechts) an ihrer Innenwand 53 eine umlaufende Nut 54 auf. Als Pendant zu dieser Nut 54 sind im vorderen Endbereich des Wickelkerns 4 zwei Kugeldruckstücke 42 vorgesehen, welche beim Aufschieben der Hülse 5 auf den Wickelkern 4 in die Nut 54 einrastet. Sind die Kugeldruckstücke 42 dann in die Nut 54 eingerastet, so ist die Hülse 5 sowohl gegen seitliches Verdrehen (durch den Stift 41, der in die Nut 50 eingreift) als auch gegen ein Verschieben in Richtung der Drehachse D (durch die in die Nut 54 eingerasteten Kugeldruckstücke 42) gesichert und damit für den Betrieb der Kassette bereit. Um den Sitz der Hülse 5 auf dem Wickelkern 4 noch weiter zu verbessern, können m Kugeldruckstücke 42 auf einem Umfang im vorderen Endbereich des Wickelkerns 4 vorgesehen sein. Es sei aber betont, dass schon ein einziges Kugeldruckstück alleine schon einen sicheren Sitz der Hülse 5 auf dem Wickelkern 4 gewährleistet. Sind m Kugeldruckstücke 42 vorgesehen, so ist es zweckmässig, wenn sie allgemein um einen Winkel von β = 360°/m gegeneinander versetzt angeordnet sind. Gleichermassen einfach wie das Aufschieben der Hülse 5 auf den Wickelkern 4 abläuft, kann die Hülse 5 auch wieder vom Wickelkern 4 abgezogen werden. Dabei muss natürlich der Widerstand, den das Kugeldruckstück 42 nach dem Einrasten in die Nut 54 diesem Abziehen der Hülse 5 vom Wickelkern 4 entgegensetzt, überwunden werden. Durch diesen einfachen Mechanismus ist gewährleistet, dass die Hülse 5 beim Betrieb der Kassette fest auf dem Wickelkern 4 aufsitzt, andererseits die Montage und Demontage bzw. das Auswechseln der Hülse sehr einfach und bequem möglich ist.

Wie weiterhin aus den Fig. 1 und 2 zu erkennen ist, weist die Aussenwand 55 der Führungshülse 5 eine Anzahl von auf dem Umfang umlaufenden Nuten 56 auf, in die jeweils ein O-förmiger Ring R eingelegt ist, dessen Oberfläche einen hohen Reibungskoëffizienten aufweist. An diesen Ringen R bleibt das fotografische Bandmaterial, das mit Hilfe der Leitorgane um die Führungshülse 5 herumgeführt wird, haften und wird so um die Hülse 5 herum aufgewickelt.

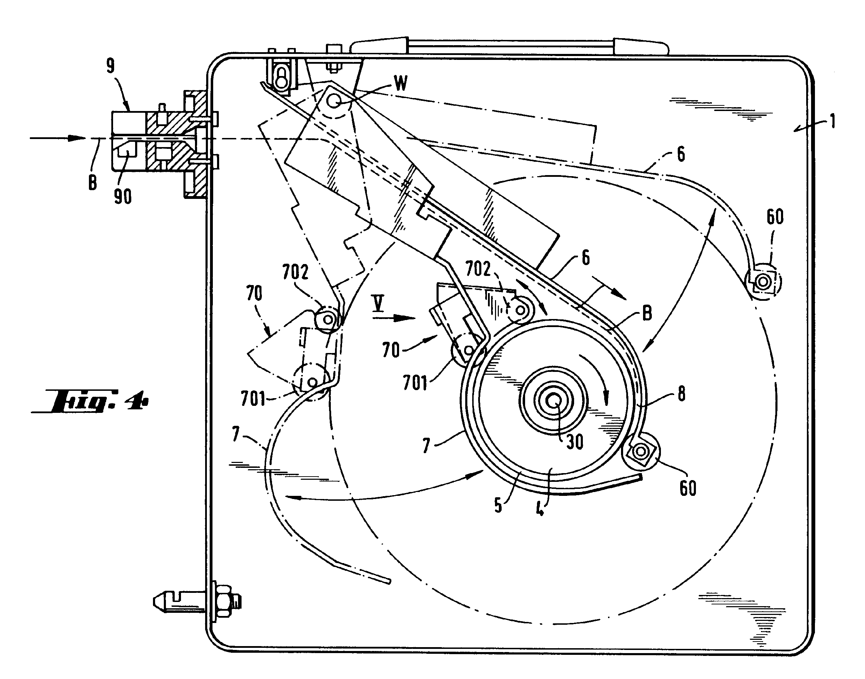

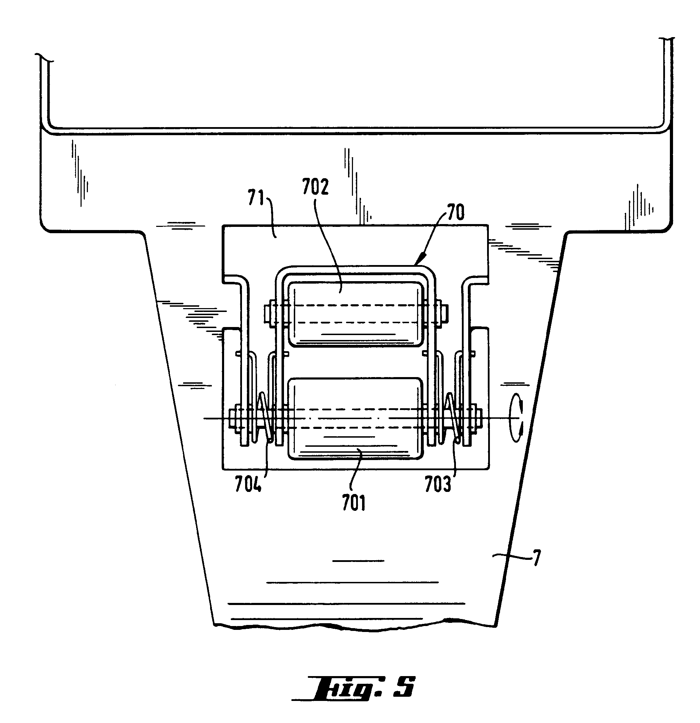

Fig. 4 zeigt eine Ansicht einer geöffneten Kassette, wobei der Einfachheit halber im Innenraum der Kassette nur die beiden Leitorgane 6 und 7 dargestellt sind, da anhand dieser Figur die Wirkungsweise der Leitorgane 6 und 7 erläutert werden soll. Die beiden Leitorgane 6 und 7, wobei mit 6 das obere und mit 7 das untere Leitorgan bezeichnet ist, sind um die gleiche Welle W schwenkbar angeordnet. Man erkennt, dass sie einen schmalen Bandkanal 8 definieren, der sich im Bereich des Wickelkerns 4 mit der aufgesetzten Hülse 5 in geringem Abstand von der Führungshülse im wesentlichen ganz um die Führungshülse 5 herum erstreckt. Das obere Leitorgan 6 führt dabei das Bandmaterial im wesentlichen um die obere Hälfte und das untere Leitorgan im wesentlichen um die untere Hälfte der Führungshülse. In einem ersten Zustand, in dem noch kein Bandmaterial auf die Führungshülse 5 aufgewickelt ist, verlaufen die beiden Leitorgane 6 und 7 im wesentlichen längs einer Achse, welche auf die Gebrauchslage der Kassette bezogen etwa in "zehn Minuten vor vier Uhr"-Richtung weist. Gelangt nun das fotografische Bandmaterial B (gestrichelte Linie) in den Bereich des Wickelkerns 4 mit der aufgesetzten Führungshülse 5, so wird es im Bandkanal 8 um die Hülse herum geführt und bleibt aufgrund der Reibung an der Aussenwand 55 der Hülse 5 (siehe dazu die Erläuterungen zu Fig. 2) bzw. an den O-förmigen Ringen R der Hülse haften. Dreht sich der Wickelkern 4 mit der aufgesetzten Hülse 5 weiter, so gelangt das Bandmaterial B an das der Hülse 5 zugewandte Ende des oberen Leitorgans 6, wo es durch eine dort vorgesehene Rolle 60 an die Aussenwand 55 der Hülse 5 angedrückt wird. Diese Rolle 60 ist in dem ersten Zustand, in dem noch kein Bandmaterial aufgewickelt ist, bezogen auf die Gebrauchslage der Kassette etwa in der "vier Uhr"-Stellung angeordnet. In seinem weiteren Verlauf gelangt das Bandmaterial B durch den Bandkanal 8 nach etwa einer halben Umdrehung des Wickelkerns an eine Stelle, an der am unteren Leitorgan 7 ein Andrückrollenteil 70 vorgesehen ist, welches das Bandmaterial ebenfalls gegen die Aussenwand 55 der Führungshülse 5 drückt. Dieses Andrückrollenteil 70, auf dessen Ausführung weiter unten noch genauer eingegangen wird, ist in dem ersten Zustand, in dem noch kein Bandmaterial aufgewickelt ist, etwa zwischen der "zehn Uhr"-Stellung und der "elf Uhr"-Stellung, bezogen auf die Gebrauchslage der Kassette, angeordnet. Das Andrückrollenteil 70 umfasst zwei Rollen 701 und 702, die das Bandmaterial gegen die Aussenwand 55 der Führungshülse drücken. Schwenkbar ist dieses Rollenteil 70 um die Achse der hinteren Rolle 701. Um das Rollenteil schwenken zu können, ist in dem untern Leitorgan 7 eine Aussparung 71 (erkennbar in Fig. 5) vorgesehen, durch die hindurch das Rollenteil 70 geschwenkt werden kann. Wenn nun einmal einige Schichten des Bandmaterials B auf die Hülse 5 aufgewickelt sind, so drückt der Wickel des Bandmaterials B die Rolle 60 nach aussen weg und damit das obere Leitorgan 6 im wesentlichen nach oben. Gleichzeitig drückt der Wickel des Bandmaterials B die hintere Rolle 701 des Andruckrollenteils 70 nach aussen weg, wodurch das untere Leitorgan 7 um die Welle W herum im wesentlichen nach unten geschwenkt wird. Damit das Rollenteil 70 weiterhin das Bandmaterial B gegen die Führungshülse bzw. gegen die äusserste Schicht des bereits aufgewickelten Bandmaterials B drücken kann, sind Mittel vorgesehen, die mit dem untere Leitorgan 7 so zusammenwirken, dass beide Rollen 701 und 702 des Rollenteils 70 stets gegen die äusserste Schicht des aufgewickelten Bandmaterials B drücken. Beispielsweise können diese Mittel eine Feder (nicht dargestellt) umfassen, die so angeordnet ist, dass sie das untere Leitorgan 7 so zieht oder drückt, dass stets die hintere Rolle 701 des Rollenteils 70 auf der äussersten Schicht des Bandmaterials B anliegt. Weitere in Fig . 4 nicht dargestellte Federn 703 und 704 des Rollenteils 70 (Fig. 5) sorgen dafür, dass die vordere Rolle 702 stets gegen die äusserste Schicht des aufgewickelten Bandmaterials B gedrückt bleibt. Ist der Aufwickelvorgang beendet, so kann durch einfaches Zurückklappen des Rollenteils 70 mit der Hand und durch Wegschwenken der beiden Leitorgane 6 und 7 die Hülse 5 auf die bereits weiter oben erläuterte einfache Art und Weise vom Wickelkern 4 abgezogen werden und eine neue Hülse 5 kann aufgeschoben werden.

Fig. 5 zeigt einen Ausschnitt einer Ansicht des unteren Leitorgans 7. Die Ansicht erfolgt dabei in Richtung des Pfeiles V in Fig. 4, also von links her gegen die Unterseite des Leitorgans 7. Dieser Ausschnitt zeigt das Rollenteil 70 noch einmal deutlicher. Die beiden Federn 703 und 704 drücken beim Betrieb der Kassette die vordere Rolle 702 gegen die jeweils äusserste Schicht des aufgewickelten Bandmaterials B und damit das Bandmaterial B an die Aussenwand 55 der Führungshülse 5 bzw. gegen den bereits um die Hülse 5 gewickelten Wickel des Bandmaterials. In Fig. 5 drücken die Federn 703 und 704 die vordere Rolle 702 also in der Richtung in die Zeichenebene hinein. Mit Hilfe der Leitorgane 6 und 7 und den Rollenteilen 60 und 70 wird also einerseits das Bandmaterial sicher um die Führungshülse 5 herumgeführt, andererseits ist durch einfaches Wegschwenken der Leitorgane 6 und 7 sowie Zurückklappen des Rollenteils 70 eine einfache Montage und Demontage der Hülse 5 möglich. Der mechanische Aufwand bei der Realisierung einer solchen Kassette ist dabei vergleichsweise gering.

Anhand von Fig. 1 und Fig. 2 ist oben bereits erläutert worden, wie die Hülse 5 vom Wickelkern 4 abgezogen werden kann, beispielsweise wenn die Hülse 5 voll bewickelt ist. Bei diesen Erläuterungen ist aber lediglich auf die Montage und Demontage der Hülse 5 eingegangen worden. Vor dem Betrieb der Kassette, also nach der Montage der Hülse 5, wird natürlich jedesmal das Kassettengehäuse vollständig geschlossen und vor dem Abziehen der (bewickelten oder unbewickelten) Hülse 5 vom Wickelkern 4 muss dementsprechend zuerst das Gehäuse geöffnet werden. Zu diesem Zweck ist ein Schraubbolzen 20 vorgesehen, der durch eine Oeffnung 21 in der nicht mit dem Lagerdorn 3 versehenen Stirnplatte 2 durchgesteckt ist. Die Oeffnung 21 in der Stirnplatte 2 ist dabei so angeordnet, dass der Schraubbolzen 20 bei der Montage koaxial zum Lagerdorn 3 der anderen Stirnplatte 1 angeordnet ist. Der Schraubbolzen 20 greift beim Verschliessen der Kassette in eine Gewindebohrung 30 des Lagerdorns 3 ein. Auf der Seite der Stirnplatte 2 ragt der Schraubbolzen 20 aus dem Gehäuse heraus und ist an seinem äusseren Ende mit einem Handgriff 22 versehen, der bezüglich der zugeordneten Stirnplatte 2 ortsfest angeordnet ist und der um eine Achse 23 senkrecht zur Achse 201 des Schraubbolzens 20 klappbar gelagert ist. Der Handgriff 22 ist dabei als Drehorgan für den Schraubbolzen 20 ausgebildet. In dem in Fig. 1 gezeigten Ausführungsbeispiel weist der Handgriff 22 im wesentlichen eine plattenförmige Gestalt auf und ist auf einem Nockenorgan 24 gelagert. Dieses Nockenorgan 24 ist so ausgebildet, dass der Handgriff 22 in zwei verschiedenen Klappstellungen stabil einrastet. In der einen Klappstellung liegt er im wesentlichen parallel zum Schraubbolzen 20 und in der anderen Klappstellung im wesentlichen senkrecht zum Schraubbolzen 20. An der Aussenseite der zugeordneten Stirnplatte 2 ist eine Kuppelplatte 25 vorgesehen, die parallel zur Stirnplatte 2 verläuft und mit dieser beispielsweise über die Feder 251 auf Druck gekoppelt ist. Damit der Handgriff 22 und die Kuppelplatte 25 nach Verschliessen der Kassette in das Kassettengehäuse versenkbar sind, weist die zugeordnete Stirnplatte 2 eine zentrale muldenförmige Einbuchtung 26 auf. Die Ausbildung des Handgriffs 22, sowie die Ausbildung des Nockenorgans 24 wie überhaupt die hier beschriebene Art des Verschlussmechanismus' der Kassette ist hinlänglich bekannt, daher wurde in Fig. 1 auf die genaue Darstellung der Details dieses Verschlussmechanismus' verzichtet.

Um die Kassette an ein Kopiergerät ankoppeln zu können, ist sie mit einem vom lichtdichten Mantel abstehenden Anschlussmaul 9 versehen, das in eine entsprechend am Kopiergerät vorgesehene Anschlussöffnung einführbar ist. Dieses Anschlussmaul 9 ist in Fig. 4 dargestellt. Das aus dem Kopiergerät kommende Bandmaterial B kann durch das Anschlussmaul 9 der Kassette zugeführt werden. Da die Kassette aufgrund der Dimensionierung ihrer "Innenausstattung" nur bestimmte Bandmaterialbreiten verarbeiten kann, sind im Anschlussmaul 9 Kodiermittel, beispielsweise in Form einer Anzahl von Permanentmagneten 90 vorgesehen, deren Information kopiergeräteseitig durch Lesemittel erfassbar ist. Die Information kann beispielsweise durch die Anordnung, die Anzahl oder durch die Orientierung dieser Permanentmagnete 90 gebildet sein. Diese Art der Kodierung ist hinlänglich bekannt. In Fig. 4 ist daher auf eine genauere Darstellung der Details dieses Anschlussmauls 9 verzichtet worden.

Wie bereits erwähnt, eignet sich eine solche Kassette, wie sie anhand der Figuren 1-5 beschrieben ist, besonders für den Einsatz in Fotolabors in Verbindung mit mehr oder weniger stark automatisierten Kopiergeräten. Insbesondere eignet sie sich für den Einsatz zusammen mit dem automatischen Kopiergerät UNISCAN der Anmelderin. Sie ist aber prinzipiell auch für andere Einsatzzwecke geeignet, bei denen ein Bandmaterial auf einen Wickelkern aufgewickelt werden soll. Der mechanische Aufwand bei der Realisierung einer solchen Kassette ist vergleichsweise gering bei gleichzeitig hoher Betriebssicherheit und guter Handhabung, insbesondere bei der Montage und Demontage der Führungshülse der Kassette.

## Patentansprüche

1. Kassette zum Aufwickeln von fotografischem Bandmaterial (B), mit einem Gehäuse, das zwei gegenüberliegende Stirnplatten (1,2) und einen diese Stirnplatten lichtdicht verbindenden Mantel umfasst, wobei von den Stirnplatten wenigstens eine (2) zum Oeffnen der Kassette vom Rest des Gehäuses entfernbar ist, und mit einem im zusammengebauten Zustand der Kassette fest mit der zweiten Stirnplatte (1) verbundenen Lagerdorn (3), auf den ein drehbar gelagerter, antreibbarer Wickelkern (4) aufgesetzt ist, auf den seinerseits eine im wesentlichen hohlzylindrische Führungshülse (5) aufschiebbar ist, um welche Führungshülse das fotografische Bandmaterial (B) mit Hilfe von schwenkbar angeordneten Leitorganen (6,7) herumgeführt und so auf die Führungshülse (5) aufwickelbar ist, wobei die Führungshülse im Betrieb so fest auf dem Wickelkern (4) aufsitzt, dass sie relativ zum Wickelkern (4) nicht bewegbar ist, dadurch gekennzeichnet, dass am Wickelkern (4) und an der Führungshülse (5) Mittel (41,50,42,54) vorgesehen sind, die so zusammenwirken, dass beim Aufschieben auf den Wickelkern (4) die Führungshülse (5) in ihrer Betriebsstellung einrastet.

2. Kassette nach Anspruch 1, dadurch gekennzeichnet, dass die Mittel am Wickelkern einen Stift (41) umfassen, der, in Aufschiebrichtung der Hülse (5) betrachtet, im hinteren Endbereich des Wickelkerns (4) von dessen Aussenwand (40) im wesentlichen in radialer Richtung nach aussen absteht und in eine die Wand (51) der Führungshülse (5) durchdringende Nut (50) eingreift, welche Nut (50) sich von dem hinteren Hülsenende, das beim Aufschieben zuerst auf den Wickelkern (4) aufgeschoben wird, parallel zur Drehachse (D) mindestens um die gleiche Strecke (s₁) in die Hülse (5) hinein erstreckt, die der Stift (41) vom hinteren Ende des Wickelkerns (4) entfernt ist, und dadurch, dass die Mittel am Wickelkern (4) mindestens ein Kugeldruckstück (42) im vorderen Endbereich des Wickelkerns (4) umfassen, welches beim Aufschieben der Hülse (5) in eine in der Nähe des vorderen Hülsenendes in deren Innenwand (53) umlaufende Nut (54) einrastet.

3. Kassette nach Anspruch 2, dadurch gekennzeichnet, dass am Wickelkern (4) in seinem hinteren Endbereich ein einziger Stift (41) vorgesehen ist und dass die Hülse (5) an ihrem hinteren Ende vier die Wand (51) der Hülse (5) durchdringende Nuten (50) aufweist, die jeweils um einen Winkel (α) von 90° gegeneinander versetzt sind und dass im vorderen Endbereich des Wickelkerns (4) zwei Kugeldruckstücke (42) vorgesehen sind.

4. Kassette nach Anspruch 2, dadurch gekennzeichnet, dass n Stifte (41) auf einem Umfang im hinteren Endbereich des Wickelkerns (4) jeweils um einen Winkel (α) von 360°/n gegeneinader versetzt vorgesehen sind, dass die Führungshülse (5) an ihrem hinteren Ende n die Wand (51) der Hülse (5) durchdringende Nuten (50) aufweist, die um den gleichen Winkel (α) gegeneinander versetzt sind wie die Stifte (41) auf der Aussenwand (40) des Wickelkerns (4), und dass m Kugeldruckstücke (42) auf einem Umfang im vorderen Endbereich des Wickelkerns (4) vorgesehen sind, die jeweils um einen Winkel (β) von 360°/m gegeneinander versetzt sind.

5. Kassette nach Anspruch 1 bis 4, dadurch gekennzeichnet, dass die Aussenwand (55) der Führungshülse (5) eine Anzahl von auf dem Umfang umlaufenden Nuten (56) aufweist, in die jeweils ein O-förmiger Ring (R) eingelegt ist, dessen Oberfläche einen hohen Reibungskoeffizienten aufweist.

6. Kassette nach Anspruch 1 bis 5, dadurch gekennzeichnet, dass die schwenkbaren Leitorgane (6,7) mit Andruckmitteln (60,70) versehen sind, um das aufzuwickelnde Bandmaterial (B) beim Herumführen um die Führungshülse (5) an die Aussenwand (55) der Führungshülse (5) anzudrücken.

7. Kassette nach Anspruch 1 bis 6, dadurch gekennzeichnet, dass die schwenkbaren Leitorgane (6,7) so angeordnet und ausgebildet sind, dass sie zusammen mit der Führungshülse (5) einen schmalen Bandkanal (8) definieren, der sich im wesentlichen um die ganze Führungshülse herum erstreckt.

8. Kassette nach Anspruch 7, dadurch gekennzeichnet, dass sie ein oberes (6) und ein unteres (7) Leitorgan umfasst, die so angeordnet sind, dass in der Betriebslage das obere Leitorgan (6) sich im wesentlichen um die obere Hälfte und das untere Leitorgan (7) sich im wesentlichen um die untere Hälfte der Führungshülse (5) herum erstreckt.

9. Kassette nach Anspruch 7 oder 8, dadurch gekennzeichnet, dass das obere Leitorgan (6) an seinem der Führungshülse (5) zugewandten Ende mit einer Rolle (60) versehen ist, und dass das untere Leitorgan (7) mit einem Andruckrollenteil (70) ausgestattet ist, welches um eine mit diesem Leitorgan (7) verbundene Welle schwenkbar gelagert ist, um mit Hilfe einer am Andruckrollenteil (70) vorgesehenen Feder (703,704) das Bandmaterial (B) an die Aussenwand (55) der Führungshülse (5) anzudrücken.

10. Kassette nach Anspruch 9, dadurch gekennzeichnet, dass in dem Zustand, in dem noch kein Bandmaterial auf die Führungshülse (5) aufgewickelt ist, die am oberen Leitorgan (6) vorgesehene Rolle (60) und das am unteren Leitorgan (7) vorgesehene Andruckrollenteil (70) im wesentlichen am gegenüberliegenden Seiten der Führungshülse angeordnet sind.

11. Kassette nach Anspruch 1 bis 10, dadurch gekennzeichnet, dass die erste Stirnplatte (2) mit einem koaxial zum Lagerdom (3) der zweiten Stirnplatte (1) angeordneten Schraubbolzen (20) versehen ist, der in eine Gewindebohrung (30) im Lagerdorn (3) eingreift.

12. Kassette nach Anspruch 11, dadurch gekennzeichnet, dass der Schraubbolzen (20) an seinem äusseren Ende mit einem Handgriff (22) versehen ist, der bezüglich der ersten Stirnplatte (2) ortsfest angeordnet und um eine Achse (23) senkrecht zur Achse (201) des Schraubbolzens (20) klappbar gelagert ist und der als Drehorgan für den Schraubbolzen (20) ausgebildet ist.

13. Kassette nach Anspruch 12, dadurch gekennzeichnet, dass der Handgriff (22) im wesentlichen plattenförmige Gestalt aufweist und auf einem Nockenorgan (24) gelagert ist, welches so ausgebildet ist, dass der Handgriff (22) in zwei verschiedenen Klappstellungen einrastet, wobei er in der einen Klappstellung im wesentlichen parallel und in der anderen Klappstellung im wesentlichen senkrecht zum Schraubbolzen (20) liegt, und dass an der Aussenseite der ersten Stirnplatte (2) eine parallel zu dieser Stirnplatte angeordnete Kuppelplatte (25) vorgesehen ist, welche beim Verschliessen der Kassette mit ihrem Randbereich gegen die Stirnplatte drückt.

14. Kassette nach Anspruch 13, dadurch gekennzeichnet, dass die erste Stirnplatte eine zentrale muldenförmige Einbuchtung (26) aufweist, die die Kuppelpiatte (25) aufnimmt und in der der Handgriff (22) versenkbar ist.

15. Kassette nach Anspruch 1 bis 14, dadurch gekennzeichnet, dass sie mit einem vom lichtdichten Mantel abstehenden Anschlussmaul (9) versehen ist, das beim Ankoppeln der Kassette an ein Kopiergerät in eine an letzterem vorgesehene Anschlussöffnung einführbar ist, und durch welches das aus dem Kopiergerät kommende Bandmaterial (B) der Kassette zugeführt werden kann, und dass in diesem Anschlussmaul (9) Kodiermittel (90) vorgesehen sind, welche kopiergeräteseitig durch Lesemittel erfassbare Information über die Breite des Bandmaterials (B) enthalten, das von der Kassette verarbeitet werden kann.

16. Kassette nach Anspruch 15, dadurch gekennzeichnet, dass die Kodiermittel eine Anzahl von Permanentmagneten (90) umfasst, wobei die Information durch die Anordnung und Orientierung dieser Permanentmagnete (90) gebildet ist.

## Claims

1. A cassette for winding up photographic strip material (B), having a housing that comprises two opposing end plates (1,2) and a casing that connects those end plates in a light-tight manner, it being possible to remove a first one (2) of the end plates from the rest of the housing in order to open the cassette, and having a bearing arbor (3) which, when the cassette has been assembled, is securely connected to the second end plate (1) and on which is placed a rotatably mounted drivable winding core (4) onto which, in turn, can be slipped a guide sleeve (5) which is substantially in the form of a hollow cylinder and around which the photographic strip material (B) is guided by means of pivotably arranged guide members (6, 7) and can thus be wound onto the guide sleeve (5), the guide sleeve, during operation, seating so securely on the winding core (4) that it cannot be moved relative to the winding core (4), wherein there are provided on the winding core (4) and on the guide sleeve (5) means (41, 50, 42, 54) that so cooperate that when the guide sleeve (5) is slipped onto the winding core (4) it locks into its operating position.

2. A cassette according to claim 1, wherein the means on the winding core comprise a pin (41) that, viewed in the direction in which the sleeve (5) is slipped on, projects substantially radially outwards in the rear end region of the winding core (4) from the latter's outer wall (40) and engages in a groove (50) penetrating the wall (51) of the guide sleeve (5), which groove (50) extends, parallel to the axis of rotation (D), from the rear end of the sleeve, which is the first end to be slipped onto the winding core (4) when the sleeve is slipped on, into the sleeve (5) by at least the same distance (s₁) as the pin (41) is arranged away from the rear end of the winding core (4), and wherein the means on the winding core (4) comprise at least one ball pressure piece (42) in the front end region of the winding core (4), which piece, when the sleeve (5) is slipped on, locks into a groove (54) running round the inner wall (53) of the sleeve (5) in the vicinity of the front end of the sleeve.

3. A cassette according to claim 2, wherein a single pin (41) is provided on the winding core (4) in its rear end region, and the sleeve (5) has, at its rear end, four grooves (50) that penetrate the wall (51) of the sleeve (5) and that are offset by an angle (α) of 90° with respect to one another, and two ball pressure pieces (42) are provided in the front end region of the winding core (4).

4. A cassette according to claim 2, wherein there are arranged on a circumference in the rear end region of the winding core (4) n pins (41) which are offset by an angle (α) of 360°/n with respect to one another, the guide sleeve (5) has at its rear end n grooves (50) that penetrate the wall (51) of the sleeve (5) and are offset with respect to one another by the same angle (α) as are the pins (41) on the outer wall (40) of the winding core (4), and m ball pressure pieces (42) are provided on a circumference in the front end region of the winding core (4) which are offset by an angle (β) of 360°/m with respect to one another.

5. A cassette according to claims 1 to 4, wherein the outer wall (55) of the guide sleeve (5) has a number of grooves (56) running round the circumference into each of which is inserted an O-shaped ring (R), the surface of which has a high coefficient of friction.

6. A cassette according to claims 1 to 5, wherein the pivotable guide members (6,7) are provided with pressing means (60,70) in order to press the strip material (B) to be wound up against the outer wall (55) of the guide sleeve (5) when it is being guided round the guide sleeve (5).

7. A cassette according to claims 1 to 6, wherein the pivotable guide members (6,7) are so arranged and constructed that they define together with the guide sleeve (5) a narrow channel (8) for the strip, which channel extends substantially completely round the guide sleeve.

8. A cassette according to claim 7, which comprises an upper (6) and a lower (7) guide member which are so arranged that, in the operating position, the upper guide member (6) extends round substantially the upper half and the lower guide member (7) extends round substantially the lower half of the guide sleeve (5).

9. A cassette according to claim 7 or 8, wherein the upper guide member (6) is provided at its end facing the guide sleeve (5) with a roller (60), and the lower guide member (7) is equipped with a pressure roller component (70), which is mounted to pivot about a shaft connected to that guide member (7), in order to press the strip material (B) against the outer wall (55) of the guide sleeve (5) by means of a spring (703,704) provided on the pressure roller component (70).

10. A cassette according to claim 9, wherein, in the state in which no strip material has yet been wound onto the guide sleeve (5), the roller (60) on the upper guide member (6) and the pressure roller component (70) on the lower guide member (7) are arranged substantially on opposite sides of the guide sleeve.

11. A cassette according to claims 1 to 10, wherein the first end plate (2) is provided with a threaded bolt (20) which is arranged coaxially with respect to the bearing arbor (3) of the second end plate (1) and engages in a threaded bore (30) in the bearing arbor (3).

12. A cassette according to claim 11, wherein the threaded bolt (20) is provided at its outer end with a handle (22) which is fixed in position relative to the first end plate (2) and is mounted so that it can be folded about an axis (23) perpendicular to the axis (201) of the threaded bolt (20) and is in the form of a member for rotating the threaded bolt (20).

13. A cassette according to claim 12, wherein the handle (22) has a substantially plate-shaped form and is mounted on a cam member (24) which is in such a form that the handle (22) locks into two different folding positions, it being substantially parallel to the threaded bolt (20) in one folding position and substantially perpendicular to the threaded bolt (20) in the other folding position, and there is provided on the outside of the first end plate (2) a coupling plate (25) which runs parallel to that end plate and presses with its edge region against the end plate when the cassette is closed.

14. A cassette according to claim 13, wherein the first end plate has a central trough-shaped recess (26) which accommodates the coupling plate (25) and into which the handle (22) can be lowered.

15. A cassette according to claims 1 to 14, which is provided with a connecting mouth (9) which projects from the light-tight casing and, when the cassette is coupled to a copying apparatus, can be inserted into a connecting opening provided on that apparatus and through which the strip material (B) coming out of the copying apparatus can be conveyed to the cassette, and coding means (90) are provided in that connecting mouth (9) which contain information, recognisable by reading means in the copying apparatus, concerning the width of the strip material (B) that can be processed by the cassette.

16. A cassette according to claim 15, wherein the coding means comprise a number of permanent magnets (90), the information being in the form of the arrangement and orientation of those permanent magnets (90).

## Revendications

1. Cassette pour enrouler du matériau photographique en bande (B), possédant un boîtier qui comprend deux plaques opposées (1, 2) correspondant aux grandes faces de la cassette ou plaques de face et une enveloppe reliant ces plaques de façon étanche à la lumière, une première plaque de face (2) pouvant être retirée du reste du boîtier pour l'ouverture de la cassette, ainsi qu'un mandrin de montage (3) relié de façon fixe à la seconde plaque de face (1) à l'état assemblé de la cassette, mandrin sur lequel est disposé un noyau de bobinage (4) monté rotatif et pouvant être entraîné, sur lequel peut être enfilé à son tour un manchon de guidage (5) de forme essentiellement cylindrique creuse, autour duquel est guidé le matériau photographique en bande (B) à l'aide d'organes de guidage (6, 7) montés pivotants ou rotatifs, pour être enroulé ainsi sur le manchon (5), lequel est disposé si fermement sur le noyau de bobinage (4), pendant le fonctionnement, qu'il ne peut pas être déplacé par rapport à ce noyau, caractérisée en ce que des moyens (41, 50, 42, 54) sont prévus sur le noyau de bobinage (4) et sur le manchon (5) pour coopérer de manière que lorsque le manchon (5) est enfilé sur le noyau (4), le manchon prenne sa position de service avec encliquetage.

2. Cassette selon la revendication 1, caractérisée en ce que les moyens sur le noyau de bobinage comprennent un ergot (41), qui fait essentiellement saillie radialement vers l'extérieur de la surface extérieure (40) du noyau (4) dans la zone extrême arrière de ce noyau, considérée dans la direction d'enfilage du manchon (5), ergot qui pénètre dans une encoche (50) traversant la paroi (51) du manchon (5) et s'étendant depuis l'extrémité arrière du manchon, laquelle est enfilée en premier sur le noyau (4), parallèlement à l'axe de rotation (D), sur une distance (S₁) à l'intérieur du manchon (5) qui est au moins égale à la distance séparant l'ergot (41) de l'extrémité arrière du noyau (4), et que les moyens sur le noyau de bobinage (4) comprennent au moins un déclic à bille (42) situé dans la zone extrême avant de ce noyau et dont la bille vient s'encliqueter, lorsque le manchon (5) est enfilé sur le noyau, dans une gorge périphérique (54) ménagée près de l'extrémité avant du manchon dans sa paroi interne (53).

3. Cassette selon la revendication 2, caractérisée en ce qu'un seul ergot (41) est prévu sur le noyau de bobinage (4), dans sa zone extrême arrière, et que le manchon (5) présente à son extrémité arrière quatre encoches (50) traversant la paroi (51) du manchon (5), qui sont mutuellement décalées chaque fois d'un angle (a) de 90°, et que deux déclics à billes (41) sont prévus dans la zone extrême avant du noyau (4).

4. Cassette selon la revendication 2, caractérisée en ce que n ergots (41) sont prévus sur un pourtour dans la zone extrême arrière du noyau de bobinage (4), avec un décalage mutuel correspondant chaque fois à un angle (α) de 360°/n, que le manchon (5) présente à son extrémité arrière n encoches (50), traversant la paroi (51) de la douille (5), qui sont mutuellement décalées du même angle (α) que les ergots (41) sur la surface latérale extérieure (40) du noyau (4), et que m déclics à billes (42) sont prévus sur un pourtour dans la zone extrême avant du noyau (4), déclics qui sont mutuellement décalés chaque fois d'un angle (β) de 360°/m.

5. Cassette selon les revendications 1 à 4, caractérisée en ce que la paroi latérale extérieure (55) du manchon (5) présente un certain nombre de gorges périphériques (56), dans chacune desquelles est placé un joint torique (R) dont la surface possède un haut coefficient de frottement.

6. Cassette selon les revendications 1 à 5, caractérisée en ce que les organes de guidage rotatifs (6, 7) sont pourvus de moyens de pressage (60, 70) pour presser le matériau en bande (B) à enrouler contre la surface latérale extérieure (55) du manchon (5) lors du guidage de ce matériau autour du manchon.

7. Cassette selon les revendications 1 à 6, caractérisée en ce que les organes de guidage rotatifs (6, 7) sont agencés et conformés de manière qu'ils définissent ensemble avec le manchon (5) un étroit canal de bande (8) qui s'étend essentiellement tout autour du manchon.

8. Cassette selon la revendication 7, caractérisée en ce que qu'elle comprend un organe de guidage supérieur (6) et un organe de guidage inférieur (7) agencés de manière qu'à la position de service, l'organe de guidage supérieur (6) s'étende essentiellement autour de la moitié supérieure et l'organe de guidage inférieur (7) s'étende essentiellement autour de la moitié inférieure du manchon (5).

9. Cassette selon la revendication 7 ou 8, caractérisée en ce que l'organe de guidage supérieur (6) est pourvu d'un galet (6) à son extrémité dirigée vers le manchon (5), et que l'organe de guidage inférieur (7) est muni d'un porte-galets de pressage (70), qui est monté pivotant ou rotatif autour d'un axe solidaire de cet organe de guidage (7) pour, à l'aide d'un ressort (703, 704) prévu sur le porte-galets (70), presser le matériau en bande (B) contre la surface latérale extérieure (55) du manchon (5).

10. Cassette selon la revendication 9, caractérisée en ce que, dans l'état où du matériau en bande n'a pas encore été enroulé sur le manchon (5), le galet (60) prévu sur l'organe de guidage supérieur (6) et le porte-galets (70) prévu sur l'organe de guidage inférieur (7), sont placés essentiellement sur des côtés opposés du manchon.

11. Cassette selon les revendications 1 à 10, caractérisée en ce que la première plaque de face (2) est pourvue d'une vis (20), disposée coaxialement au mandrin de montage (3) porté par la seconde plaque de face (1), vis qui pénètre dans un trou taraudé (30) de ce mandrin (3).

12. Cassette selon la revendication 11, caractérisée en ce que la vis (20) est pourvue à son extrémité extérieure d'un élément de manoeuvre (22) disposé fixe par rapport à la première plaque de face (2) et monté rabattable autour d'un axe (23) perpendiculaire à l'axe (201) de la vis (20), élément qui est réalisé comme organe de manoeuvre pour tourner la vis (20).

13. Cassette selon la revendication 12, caractérisée en ce que l'élément de manoeuvre (22) possède essentiellement une forme en plaque et est monté sur un organe saillant (24) conformé de manière que l'élément de manoeuvre (22) soit encliquetable à deux positions de pivotement ou de rotation, dont l'une correspond à une position étendue où l'élément est essentiellement parallèle à la vis (20) et l'autre est une position rabattue où l'élément est orienté pour l'essentiel perpendiculairement à la vis (20), et qu'une plaque de couplage (25) est prévue sur le côté extérieur de la première plaque de face (2), parallèlement à celle-ci, plaque de couplage qui, lors de la fermeture de la cassette, exerce par sa zone marginale une pression sur la plaque de face.

14. Casette selon la revendication 13, caractérisée en ce que la première plaque de face présente un creux central (26) en forme de cuvette qui reçoit la plaque de couplage (25) et dans laquelle l'élément de manoeuvre (22) est escamotable.

15. Cassette selon les revendications 1 à 14, caractérisée en ce qu'elle est pourvue d'un bec de raccordement (9) faisant saillie de l'enveloppe étanche à la lumière et pouvant être introduit, lors du couplage de la cassette à une tireuse, dans une ouverture de raccordement prévue sur celle-ci, bec à travers duquel le matérieu en bande (B) venant de la tireuse peut être amené à la cassette, et que ce bec de raccordement (9) est doté intérieurement de moyens de codage (90) qui contiennent une information relative à la largeur du matériau en bande (B), information qui peut être relevée, du côté de la tireuse, par des moyens de lecture et peut être traitée par la cassette.

16. Cassette selon la revendication 15, caractérisée en ce que les moyens de codage comprennent un certain nombre d'aimants permanents (90) qui définissent l'information par leur disposition et leur orientation.
